# EUROPEAN PATENT SPECIFICATION

(11) **EP 2 802 050 B1**
(45) Date of publication and mention of the grant of the patent: **24.07.2019**
(21) Application number: 14159489.5
(22) Date of filing: 13.03.2014
(51) Int. Cl.: H02G 3/18

(54) **Universal mounting ring**
Universeller Halterungsring
Bague universelle de montage

(30) Priority: 15.03.2013 US 201361794176 P
(43) Date of publication of application: 12.11.2014
(73) Proprietor: ASSA ABLOY AB, 107 23 Stockholm (SE)
(72) Inventor: Bousfield, Randall Dennis, Arvada, Colorado 80234 (US); Andresky, David Edward, Lafayette, Colorado 80026 (US); Padilla, Toby Mark, Lakewood, Colorado 80227 (US)
(74) Representative: Kramer Barske Schmidtchen Patentanwälte PartG mbB

(56) References cited:
- EP-A1- 1 635 434
- EP-A2- 2 477 290
- DE-U1-202012 101 901
- US-A- 5 144 777
- US-A1- 2007 181 328

## Description

### CROSS REFERENCE TO RELATED APPLICATIONS

This application claims the benefit of U.S. Provisional Application Serial No. 61/794,176 filed March 15, 2013.

### FIELD OF THE INVENTION

The present application relates to a universal adapter to permit mounting of an electronic device, such as a contact or contactless reader, miniature controller, door interface module or other electronic device in an electrical enclosure, such as a conventional electrical junction box. The adapter further allows variable positioning of the electronic device or reader within the enclosure and accommodates a wide variety of cover plates to enhance aesthetic finishes.

### BACKGROUND OF THE INVENTION

Contactless radio frequency identification (RFID) systems typically include at least one reader and a plurality of transponders, which are commonly termed credentials, cards, tags or the like. The transponder may be an active or passive radio frequency communication device which is directly attached to or embedded in an article to be identified or otherwise characterized by the reader. Alternatively, the transponder may be embedded in a portable substrate, such as a card or tag, carried by a person to be identified or otherwise characterized by the reader.

Communication between the reader and transponder is enabled by cooperative resident circuits which are provided in each reader and transponder. The resident circuit of a reader typically includes an inductor and a capacitor. The capacitor is coupled in series between the inductor and a signal driver. The inductor is usually in the form of an antenna coil which is capable of magnetically coupling to an inductor in the resonant circuit of a compatible transponder through mutual inductance. The communication is initiated when a transponder is proximately positioned relative to the reader. The reader has a power supply which conveys a current to the reader resident circuit, causing the reader antenna to produce an excitation signal in the form of an electromagnetic field. The excitation signal couples to the antenna of the proximately positioned transponder through mutual inductance and the excitation signal powers and clocks the transponder circuitry initiating operation of the transponder. These components are typically mounted on a board, such as a printed circuit board.

The transponder operation comprises the generation of a response signal at a specified frequency and transmission of the resulting transponder's response signal back to the reader. In particular, the transponder resonant circuit receives a current and responds to the excitation signal which causes the transponder antenna to produce a response signal in the form of an electromagnetic field. The response signal couples to the reader antenna through mutual inductance in substantially the same manner as described above with respect to coupling of the excitation signal to the transponder antenna.

An important operating parameter of the reader is the range of the reader when communicating with a transponder. The range of a reader is *inter alia* strongly affected by the strength of the electromagnetic field generated by the reader resonant circuit. In order to generate a field strength which provides the reader with adequate range, the designer of the reader must properly specify a resonant circuit that is appropriately tuned to a predetermined frequency for the desired application of the RFID system. The range of the reader is often altered by characteristics of the operating environment in which the reader resides. In a typical case where the reader is mounted in a fixed location on a support structure, the range of the reader is susceptible to the materials of the mounting location and other objects within the operating environment. For example, if the mounting location of a reader is in an operating environment which includes nearby metal, the metal can de-tune the resonant circuit of the reader from the predetermined frequency and drastically reduce the range of the reader. For these reasons, it is often desirable to pot a reader in a plastic housing with an epoxy and mount the reader to a wall, away from metal objects. While this approach is desirable from a functional standpoint, it is often undesirable from an aesthetic standpoint as the housing provides an unacceptable finished look. For example, the reader housing protrudes from the surface of a wall an unacceptable distance and/or utilizes a cover plate designed solely for the reader but which may not aesthetically match the cover plates used throughout the building and particularly nearby space. Additionally, because the reader is potted in the plastic housing, the housing cannot be changed.

US5144777 discloses a grommet assembly for a wall panel and method of installation. The grommet assembly includes a grommet structure for insertion into the aperture made through a wall panel and includes pivotal locking arms for locking at the back face of the wall panel. An insert sleeve provides a circular wall that upon insertion into the grommet pivots the pivotal lock arms of the grommet. The insert sleeve is further provided with snap-engagement members that snap-engage to the circular wall of the grommet so that the grommet assembly is fastened together and to the wall panel. A retention ring may be used prior to cutting an aperture in the wall to secure fabric, or other wall coverings, around the aperture to be cut to prevent displacement or tearing, and to protect the outer wall surface. The method includes the field installation of the grommet assembly from one side of a wall panel.

US2007/181328 discloses an electrical box assembly that includes an electrical outlet box and an adapter plate configured to accommodate electrical components in a single or double gang formation. An engaging mechanism permits the adapter plate to snap into the electrical outlet box without the use of screws or other fasteners. Thus, the adapter plate can be removed and rotated to change the orientation of the adapter plate and any electrical components attached thereto from a vertical to a horizontal orientation, and vice versa.

EP1635434 discloses an installation unit having a function module, which is accommodated in an installation socket. Another module is arranged on a wall by interconnecting a masking frame, and accommodated in a housing. A support ring is fixable at the socket, and comprises a circular flange assigned to a passage opening. The flange has a fastening unit, which is connected with a fastening unit for force-fit cooperation.

### SUMMARY OF THE INVENTION

In accordance with the preferred embodiment of the present invention, a universal mounting ring is provided for securing an electronic device, for example, a radio frequency identification (RFID) reader, within an electrical enclosure. It should be appreciated that he universal mounting ring may also secure other types of readers, including contact and contactless readers, and other types of electronic devices, such as miniature controller or door interface module. One example of such an enclosure is a conventional electrical junction box. The universal mounting ring provides multiple mounting positions for the electronic device relative to a cover assembly which is utilized to provide an aesthetic cover for the content of the enclosure.

More particularly, the present invention relates to a universal mounting ring according to claim 1, an assembly according to claim 6, a combination according to claim 7 and a method of using the universal mounting ring according to claim 8.

In one embodiment the universal mounting ring comprises a generally planar plate with three downwardly depending mounting tabs. The radius of curvature for the plate is the same or substantially similar to the radius for a conventional cylindrical junction box. The plate includes multiple cutouts to allow access to screw bores formed in the side walls of the enclosure or junction box. In this manner, a conventional mounting bracket may be secured to the junction box by way of screws that engage the mounting bracket and pass through the cutouts in the arcuate plate and are secured within the screw bores formed in the enclosure or junction box. Downwardly depending mounting tabs provide three mounting positions for a reader, although it should be appreciated that fewer or more mounting positions may be provided. Because the plate fits between the upper edge of an enclosure or junction box and a conventional mounting bracket, any cover assembly that interfaces with a conventional mounting bracket may be utilized to cover the reader as positioned on or within the enclosure. This provides significant aesthetic functionality by permitting the cover assembly for the reader to match cover assemblies for other enclosures or junction boxes in the same vicinity and throughout a building. It should be appreciated that the universal mounting ring would also work with custom mounting brackets in addition to conventional mounting brackets. Because the universal mounting ring permits access to the screw bores in a conventional junction box, the universal mounting ring will work with virtually any mounting bracket and cover plate designed to interface with the screw bores in a junction box or other type of electrical enclosure.

The universal mounting ring also permits the reader to be positioned within the enclosure or junction box at different positions spaced from the cover assembly. This is important for multiple reasons. For example, cover assemblies for electrical enclosures and junction boxes come in a wide variety of configurations and the inner surface of the cover assemblies may vary in structure and structural relative thickness. Accordingly, different thicknesses and structural configurations can be accomplished by adjusting the position of the reader relative to the inner surface of the cover assembly. In addition, performance of the device, for example read range for a reader, may also be adjusted by positioning the electronic device at different positions within the enclosure. Depending upon the particular circumstances for the reader installation, and the type of reader being used, including its performance characteristics, it may be desirable to adjust the read range by changing the position of the reader among the available mounting positions. Moreover, and also with respect to read range and performance, when a metal mounting bracket is used, in a preferred embodiment, the mounting bracket should be cut to form a gap or slot across the body of the mounting bracket such that the mounting bracket does not form a continuous loop of metal. By doing so, the read range of the reader will be improved. Further still, adjusting the position of the electronic device within the enclosure also permits adding additional components, for example, a liquid crystal display (" LCD") or other display, within the enclosure. As will be appreciated by those of skill in the art, adding a display to the functionality of the electronic device can enhance the functionality of the electronic device.

The Summary of the Invention is neither intended nor should it be construed as being representative of the full extent and scope of the present invention. Moreover, reference made herein to "the present invention" or aspects thereof should be understood to mean certain embodiments of the present invention and should not necessarily be construed as limiting all embodiments to a particular description. The present invention is set forth in various levels of detail in the Summary of the Invention as well as in the attached drawings and the Detailed Description of the Invention and no limitation as to the scope of the present invention is intended by either the inclusion or non-inclusion of elements, components, etc. in this Summary of the Invention.

### BRIEF DESCRIPTION OF THE DRAWINGS

The accompanying drawings, which are incorporated in and constitute a part of the specification, illustrate embodiments of the invention and together with the general description of the invention given above and the detailed description of the drawings given below, serve to explain the principles of these inventions.
Fig. 1A is an exploded front plan view of a conventional electrical junction box, mounting bracket and cover plate assembly.
Fig. 1B is an exploded perspective view of the components shown in Fig. 1A.
Fig. 2A is a top plan view of one embodiment of a universal mounting ring.
Fig. 2B is a perspective view of the universal ring mount shown in Fig. 2A.
Fig. 2C is a front elevation view of the universal ring mount shown in Fig. 2A.
Fig. 3A is an exploded front plan view of a conventional electrical junction box, an electronic device, such as an RFID reader, a universal mounting ring as shown in Fig. 2A, a mounting bracket and a cover plate.
Fig. 3B is a perspective view of the embodiment of Fig. 3A.
Fig. 4 is a top perspective view of an assembled electric junction box, universal mounting ring and reader shown in Fig. 3A, with the junction box shown in phantom.
Fig. 5 is a top perspective view of an assembled junction box, reader, universal mounting ring and mounting bracket as shown in Fig. 3A.
Fig. 6 is a front elevation view of an assembled junction box, reader, universal mounting ring, mounting bracket and cover assembly, with the junction box shown in phantom, and further showing the reader at a position farthest removed from the cover assembly.
Fig. 7 is a front elevation view of the embodiment of Fig. 6, and further showing the reader at a position closest to the cover assembly.

It should be understood that the illustrated embodiments are depicted with a conventional cylindrical electrical junction box. It should be appreciated that the invention is not limited to such junction boxes but is adapted to work with almost any electrical enclosure, including rectilinear enclosures. It should further be appreciated that an RFID reader is illustrated but that the embodiments of the present invention may be utilized with a variety of electronic devices other than readers, including but not limited to miniature controllers or door interface modules. It should also be appreciated that the drawings are not necessarily to scale. In certain instances, details that are not necessary for an understanding of the invention or that render other details difficult to perceive may have been omitted. It should be understood, of course, that the invention is not necessarily limited to the particular embodiments illustrated herein.

### DETAILED DESCRIPTION

For simplicity in understanding, the present disclosure is described and illustrated with respect to use with an RFID reader. It should be appreciated that the universal mounting ring may be used with all types of access control readers, including both contactless and contact readers, as well as other types of electronic devices, including miniature controllers and door interface modules.

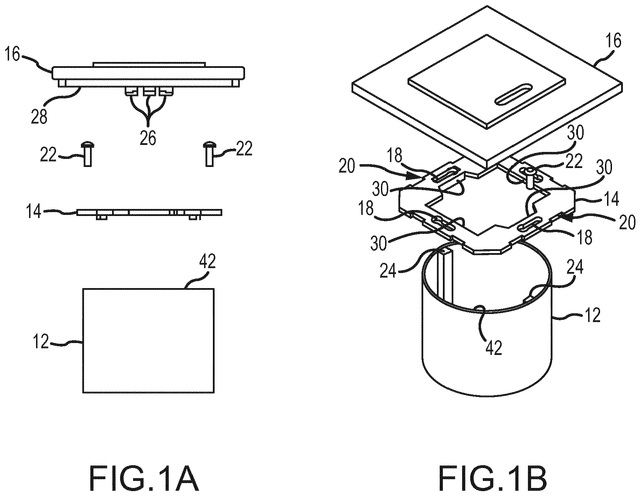

One embodiment of a prior art electrical junction box 12, mounting bracket 14 and cover assembly 16 is shown in Figs. 1A and 1B. The junction box 12 is designed to hold an electronic component, such as a light switch. The cover assembly 16 provides an aesthetic closure and finish that covers the contents of the junction box 12. The mounting bracket 14 is attached to the junction box 12 and, in turn, the cover plate assembly 16 is affixed to the mounting bracket 14. More specifically, a slot 18 is formed in each side or leg 20 of the mounting bracket 14 through which screws 22 extend and threadably engage screw bores 24 formed along the inside surface of the junction box 12. As shown, two screw bores 24 are positioned at opposite sides of the junction box 12. Typically, the cover assembly 16 is designed to engage the mounting bracket 14 with a friction fit. As seen in Fig. 1A, downwardly depending tabs 26 extend from the inner surface 28 of the cover assembly 16 to engage one or more edges 30 of the mounting bracket. Different methods and structures for attaching a cover assembly 16 to a mounting bracket 14 are known to those of skill in the art. Such different structures and methods vary and in some structures the connecting components extend different depths into the interior of the junction box 12 from the inner surface 28 of the cover assembly 16.

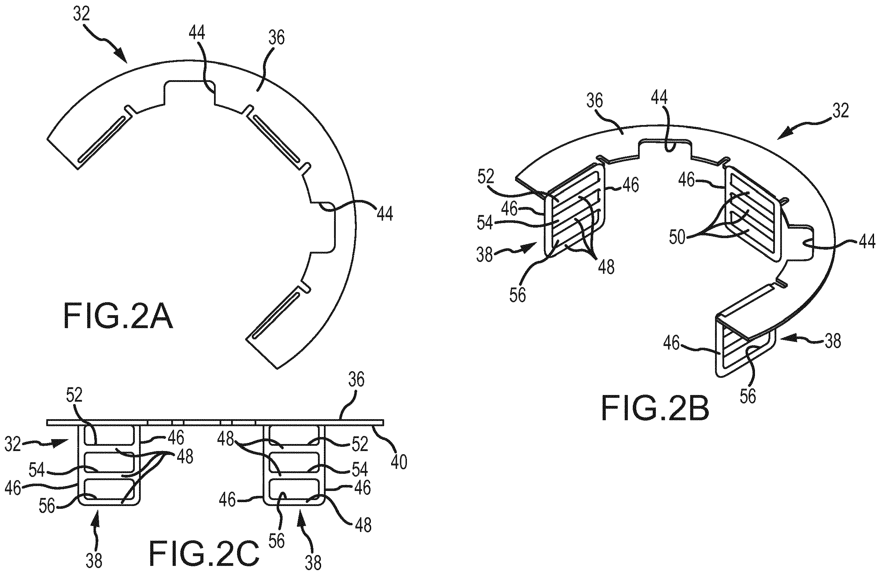

Turning to Figs. 2A-2C, one embodiment of a universal mounting ring 32 is illustrated. The universal mounting ring 32 is designed to secure an electronic device, for example an RFID reader 34, within a conventional electrical junction box 12 and also interface with a conventional mounting bracket 14 to secure a cover assembly 16 for the reader 34 over the electrical junction box 12. As illustrated, the universal mounting ring 32 comprises a partial arcuate plate 36 and a plurality of mounting tabs 38 extending generally perpendicular to the plane of the arcuate plate 36. In one embodiment, the radius of the curvature of the arcuate plate 36 is the same as or nearly similar to that of the cylindrical junction box 12 such that the lower surface 40 of the arcuate plate 36 may rest upon the upper edge 42 of such a junction box. One or more cutouts 44 are formed in the arcuate plate 36 to provide access to screw bores 24 provided on the inside wall of a junction box 12. The orientation or placement of multiple cutouts is arranged on the arcuate plate 36 to facilitate use of the arcuate plate with junction boxes having either a circular or rectangular opening.

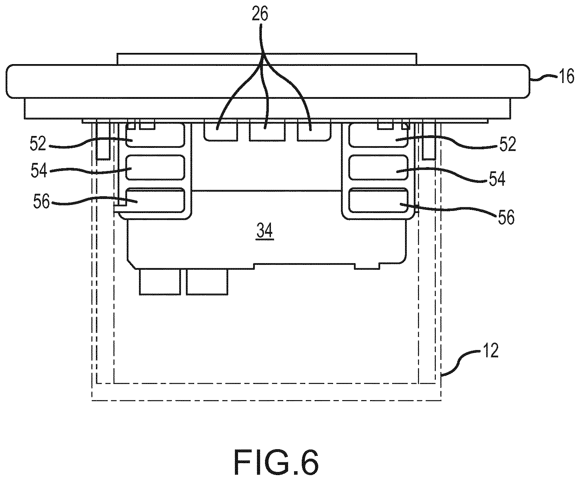

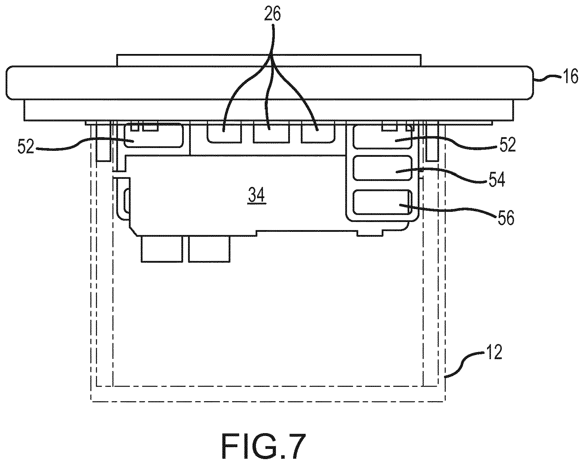

In one embodiment, the downwardly depending mounting tabs 38 are generally ladder-shaped. For example, as shown in Figs. 2B and 2C, each tab 38 comprises two legs 46 extending from the arcuate plate 36 and oriented generally parallel to each other. Multiple cross members 48 extend between the two legs 46 to define notches 50 which are adapted to receive a complementary portion of a reader 34. Each cross-member 48 provides a separate mounting position and, in a preferred embodiment, multiple mounting positions are provided on each tab 38. A first mounting position 52 is generally proximate the underneath surface of the arcuate plate 36. As illustrated, each successive mounting position 54, 56 repositions the reader 34 a farther distance from the arcuate plate 36. Positioning the reader 34 relative to the arcuate plate 36 in the various mounting positions can alter the read range of the reader 34. Altering the read range of the reader 34 may be necessary for security reasons or for other reasons known to persons of ordinary skill in the art. In addition, the ability to position the reader at various depths or locations within the junction box allows greater flexibility in the selection and use of different cover assemblies 16. As previously noted, cover assemblies 16 are constructed differently and have different assembly structures that extend different depths or distances into the junction box 12. The ability to alter and adjust the position of the reader 34 relative to the cover assembly 16 has the added benefit of allowing use of a greater number of variety of cover assemblies 16 from different manufactures or vendors. Fig. 6 shows a reader 34 mounted farthest from the cover assembly 16. Fig. 7 shows a reader 34 mounted closest to the cover assembly 16.

It should be appreciated that more than three mounting positions may be included on each mounting tab 38. Similarly, three mounting tabs 38 are not required. Rather, typically at least two tabs 38 would be required without additional structure for securing the reader relative to the arcuate plate. It is contemplated that a single mounting tab 38 could be utilized in combination with a positive latching or securing mechanism. In addition, the mounting tabs 38 do not need to be "ladder" shaped, but may be any configuration that will cooperate with and secure the position of a reader.

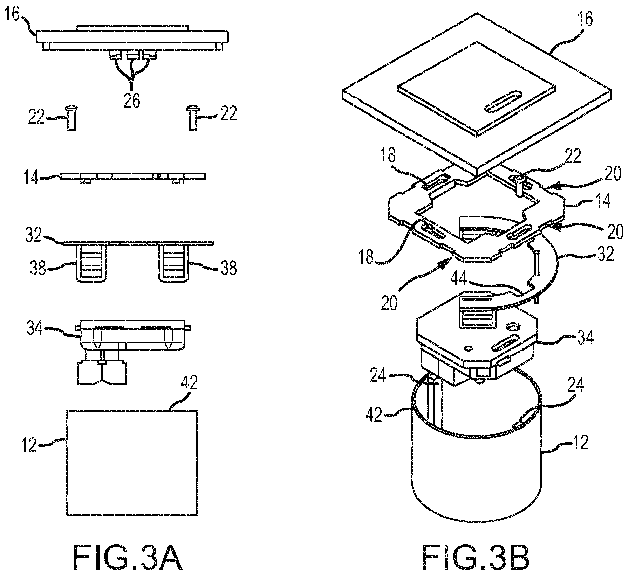

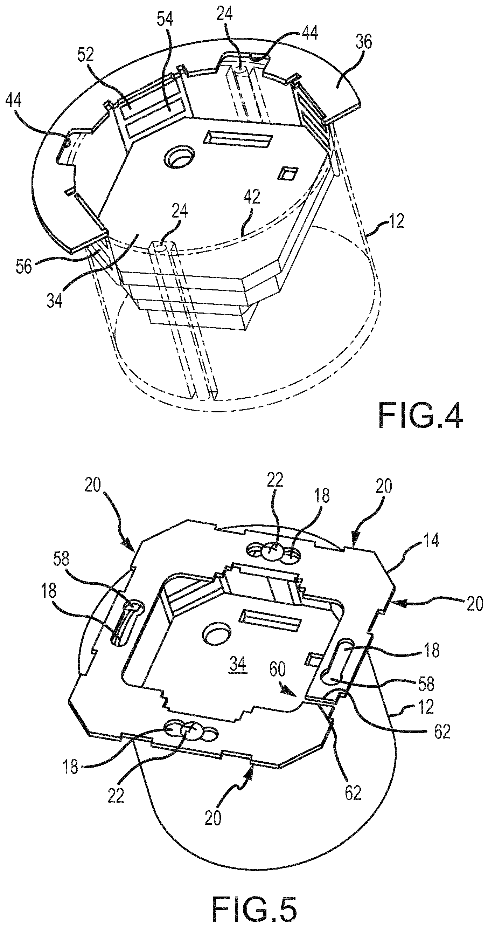

As shown in Figs. 3A and 3B, the arcuate plate 36 and reader 34 may be assembled in a conventional junction box 12. The arcuate plate 36 is adapted to accommodate and interface with a square mounting bracket 14. As shown in Fig. 4, a reader 34 is secured to the arcuate plate 36 and the arcuate plate 36 and reader 34 are positioned in the junction box 12. The arcuate plate 36 is oriented with the cutouts 44 to provide access to the screw bores 24 of the junction box 12. A mounting bracket 14 is then positioned over the arcuate plate 36 and secured to the junction box 12. More particularly, as shown in Fig. 5, two screws 22 pass through slots 18 to engage the screw bore 24 in the side wall of an electrical junction box 12. In the embodiment illustrated, the slots 18 are shaped with an enlarged end 58 to receive the head of a screw. The mounting bracket is then rotated such that the screw head is positioned within the narrow portion of the slot 18 and the screw is tightened. Securing the mounting bracket 14 to the junction box 12 simultaneously secures the arcuate plate 36 relative to the junction box 12.

The reader 34 cover assembly 16 is secured directly to the mounting bracket 14 by means known to those of skill in the art. As a result of the use of a universal mounting ring 32, the reader 34 cover assembly 16 may be mounted flush with the surface of the wall to provide a pleasing aesthetic look.

As can further be seen in Fig. 5, in at least one embodiment, one leg or side 20 of the mounting bracket 14 is cut completely through to form a slot 60 in the mounting bracket. The purpose of the slot 60 is to prevent the mounting bracket 14 from forming a continuous loop of metal. In addition, the slot 60 should be oriented such that it is not positioned on top of the arcuate plate 36. The slot 60 should be oriented in an open area with no other component or piece of metal interconnecting the opposed edges 62 of the slot. Forming a slot 60 completely through one side 20 substantially reduces interference with the reader antenna and read range of the reader is improved.

## Claims

1. A universal mounting ring (32) configured to fit on or within an electrical enclosure (12), comprising, a substantially planar and generally C-shaped plate (36) having a width, an outer perimeter edge and an inner perimeter edge, and at least one mounting tab (38) extending generally perpendicular to the plate (36) **characterized in that** the mounting tab (38) comprises a plurality of mounting positions (52, 54, 56) for receiving an electronic device (34) and wherein each mounting position (52, 54, 56) is located a different distance from the generally C-shaped plate (36).

2. The universal mounting ring (32) of claims 1, further comprising a plurality of notches formed proximate the inner perimeter edge of the plate (36) and sized to accommodate an attachment means secured to the electrical enclosure (12).

3. The universal mounting ring (32) of claims 1 or 2, wherein the at least one mounting tab (38) comprises first and second members extending from the plate (36) and positioned in a spaced relationship and generally parallel to each other, and a plurality of cross members interconnecting the first and second members and positioned generally parallel to the plate (36) to form at least one mounting position.

4. The universal mounting ring (32) of any one of claims 1 to 3, comprising at least three mounting positions on each mounting tab (38).

5. The universal mounting ring (32) of any one of claims 1 to 4, further comprising three mounting tabs (38).

6. Assembly comprising an electrical enclosure (12), the universal mounting ring (32) of any one of claims 1 to 5, a mounting bracket (14), a cover plate assembly (16) and the electronic device (34); wherein the electronic device (34) is received by the universal mounting ring (32) and the electronic device (34) is positioned inside the electrical enclosure (12), the mounting bracket (14) being mounted to the universal mounting ring (32) and the electrical enclosure (12), and the cover plate assembly (16) being mounted to the mounting bracket (14).

7. Combination including the assembly of the previous claim and an enclosure defined by a wall; the electrical enclosure (12) of the assembly being positioned inside the wall enclosure such that the cover plate (16) is flush with a surface of the wall and the electrical enclosure (12) and the electronic device (34) are recessed inside the wall enclosure.

8. A method of using the universal mounting ring (32) of claims 1 to 5, comprising:
a. Securing an electronic device (34) to at least one mounting tab (38) of the universal mounting ring (32);
b. Positioning the universal mounting ring (32) and electronic device (34) in an electrical enclosure (12);
c. Positioning a mounting bracket (14) over the universal mounting ring (32) and attaching the mounting bracket (14) to the enclosure (12); and
d. Positioning a cover assembly (16) over the mounting bracket (14) and securing the cover assembly (16) to the mounting bracket (14).

9. The method of claim 8, further comprising, adjusting the performance of the electronic device (34) by removing a section (60) of the mounting bracket (14) such that the mounting bracket (14) does not form a continuous enclosed loop.

10. The method of claim 8 or 9 wherein attaching a cover assembly (16) to the mounting bracket (14) further comprises positioning a portion of the cover assembly (16) flush with the surface of a wall.

11. The method of any one of claims 8 to 10 comprising, adjusting the performance of the electronic device (34)by repositioning the electronic device (34) relative to the at least one mounting tab.

12. The method of any one of claims 8 to 11, further comprising positioning the plate (36) of the universal mounting ring (32) relative to the mounting bracket (14) such that the portion of the removed section of the mounting bracket (14) is not in contact with the plate (36).

13. The method of any one of claims 8 to 12 wherein the enclosure (12) is a cylindrical junction box, or the enclosure (12) is rectilinear in shape.

14. The method of claim 8, wherein the electrical enclosure (12) is recessed in a wall, and the cover assembly (16) is mounted to the mounting bracket (14) such that the cover assembly (16) is flush with the surface of the wall.

15. The method of any one of claims 8 to 14 wherein the electronic device (34) is one of a contact reader, a contactless reader, a miniature controller and a door interface module.

## Patentansprüche

1. Universalbefestigungsring (32), der zum Anbringen an oder in einem Elektrogehäuse (12) ausgebildet ist, enthaltend eine im Wesentlichen ebene und grundsätzlich C-förmige Platte (36) mit einer Breite, einem Außen- und einem Innenumfangsrand und zumindest eine Befestigungslasche (38), die sich grundsätzlich senkrecht zu der Platte (36) erstreckt, **dadurch gekennzeichnet, dass** die Befestigungslasche (38) eine Mehrzahl von Befestigungspositionen (52, 54, 56) zum Aufnehmen einer elektronischen Vorrichtung (34) enthält, und bei dem jede Befestigungsposition (52, 54, 56) in einem anderen Abstand von der grundsätzlich C-förmigen Platte gelegen ist.

2. Universalbefestigungsring (32) nach Anspruch 1, weiter umfassend eine Mehrzahl von Aussparungen, die nahe dem Innenumfangsrand der Platte (36) ausgebildet sind und zum Aufnehmen eines an dem Elektrogehäuse (12) befindlichen Befestigungsmittels dimensioniert sind.

3. Universalbefestigungsring (32) nach Anspruch 1 oder 2, bei dem die zumindest eine Befestigungslasche (38) erste und zweite Elemente, die sich von der Platte (36) erstrecken und zueinander beabstandet und im Wesentlichen parallel zueinander positioniert sind, und eine Mehrzahl von Querträgern, die die ersten und zweiten Elemente miteinander verbinden und im Wesentlichen parallel zu der Platte (36) positioniert sind, zum Ausbilden mindestens einer Befestigungsposition enthält.

4. Universalbefestigungsring (32) nach einem der Ansprüche 1 bis 3, umfassend mindestens drei Befestigungspositionen an jeder Befestigungslasche (38).

5. Universalbefestigungsring (32) nach einem der Ansprüche 1 bis 4, weiter umfassend drei Befestigungslaschen (38).

6. Baugruppe enthaltend ein Elektrogehäuse (12), den Universalbefestigungsring (32) nach einem der Ansprüche 1 bis 5, eine Halterung (14), eine Abdeckplattenbaugruppe (16) und die elektronische Vorrichtung (34), wobei die elektronische Vorrichtung (34) von dem Universalbefestigungsring (32) aufgenommen ist und die elektronische Vorrichtung (34) im Inneren des Elektrogehäuses (12) positioniert ist und die Halterung (14) an dem Universalbefestigungsring (32) und der Elektrogehäuse (12) befestigt ist, und die Abdeckplattenbaugruppe (16) an der Halterung (14) befestigt ist.

7. Kombination beinhaltend die Baugruppe des vorangegangenen Anspruchs und ein durch eine Wand definiertes Gehäuse, wobei das Elektrogehäuse (12) der Baugruppe so in dem Wandgehäuse positioniert ist, dass die Abdeckplatte (16) bündig mit einer Oberfläche der Wand ist, und das Elektrogehäuse (12) und die elektronische Vorrichtung (34) in dem Wandgehäuse versenkt sind.

8. Verfahren zum Verwenden des Universalbefestigungsrings (32) nach den Ansprüchen 1 bis 5, enthaltend
a. Anbringen einer elektronischen Vorrichtung (34) an mindestens einer Befestigungslasche (38) des Universalbefestigungsrings (32),
b. Positionieren des Universalbefestigungsrings (32) und der elektronischen Vorrichtung (34) in einem Elektrogehäuse (12),
c. Positionieren einer Halterung (14) über dem Universalbefestigungsring (32) und Befestigen der Halterung (14) an der Fassung (12) und
d. Positionieren einer Abdeckbaugruppe über der Halterung (14) und Sichern der Abdeckbaugruppe (16) an der Halterung (14).

9. Verfahren nach Anspruch 8, weiter umfassend das Einstellen der Leistung der elektronischen Vorrichtung (34) durch Entfernen eines Abschnitts (60) der Halterung (14), so dass die Halterung (14) keinen durchgehend geschlossenen Rahmen bildet.

10. Verfahren nach Anspruch 8 oder 9, bei dem das Befestigen einer Abdeckbaugruppe (16) an der Halterung (14) ferner das bündige Positionieren eines Teils der Abdeckbaugruppe (16) mit der Oberfläche einer Wand umfasst.

11. Verfahren nach einem der Ansprüche 8 bis 10, umfassend ein Einstellen der Leistung der elektronischen Vorrichtung (34) durch Neupositionierung der elektronischen Vorrichtung (34) relativ zu der mindestens einen Befestigungslasche.

12. Verfahren nach einem der Ansprüche 8 bis 11, weiter umfassend ein Positionieren der Platte (36) des Universalbefestigungsrings (32) relativ zu der Halterung (14) derart, dass der Teil des entfernten Abschnitts der Halterung (14) nicht mit der Platte (36) in Kontakt ist.

13. Verfahren nach einem der Ansprüche 8 bis 12, bei dem das Gehäuse (12) eine zylindrische Anschlussdose ist oder das Gehäuse (12) eine geradlinige Form hat.

14. Verfahren nach Anspruch 8, bei dem das Elektrogehäuse (12) in einer Wand versenkt ist und die Abdeckbaugruppe (16) so an der Halterung befestigt ist, dass die Abdeckbaugruppe (16) bündig mit der Oberfläche der Wand ist.

15. Verfahren nach einem der Ansprüche 8 bis 14, bei dem die elektronische Vorrichtung (34) ein Kontaktleser, ein berührungsloser Leser, eine Miniatursteuereinheit oder ein Tür-Interface-Modul ist.

## Revendications

1. Bague universelle de montage (32) configurée pour s'ajuster sur ou à l'intérieur d'un boîtier électrique (12), comprenant, une plaque (36) sensiblement plane et généralement en forme de C ayant une largeur, un bord périphérique extérieur et un bord périphérique intérieur, et au moins une patte de montage (38) s'étendant généralement de manière perpendiculaire à la plaque (36) **caractérisée en ce que** la patte de montage (38) comprend une pluralité de positions de montage (52, 54, 56) pour recevoir un dispositif électronique (34) et où chaque position de montage (52, 54, 56) est située à une distance différente de la plaque (36) généralement en forme de C.

2. Bague universelle de montage (32) selon la revendication 1, comprenant en outre une pluralité d'encoches formées à proximité du bord périphérique intérieur de la plaque (36) et dimensionnées pour recevoir un moyen de fixation fixé au boîtier électrique (12).

3. Bague universelle de montage (32) selon les revendications 1 ou 2, dans laquelle ladite au moins une patte de montage (38) comprend des premier et second éléments s'étendant depuis la plaque (36) et positionnés dans une relation espacée et généralement parallèles entre eux, et une pluralité de traverses reliant les premier et second éléments et placées généralement de manière parallèle à la plaque (36) pour former au moins une position de montage.

4. Bague universelle de montage (32) selon l'une quelconque des revendications 1 à 3, comprenant au moins trois positions de montage sur chaque patte de montage (38).

5. Bague universelle de montage (32) selon l'une quelconque des revendications 1 à 4, comprenant en outre trois pattes de montage (38).

6. Ensemble comprenant un boîtier électrique (12), la bague universelle de montage (32) selon l'une quelconque des revendications 1 à 5, un support de montage (14), un ensemble de plaque de recouvrement (16) et le dispositif électronique (34) ; dans lequel le dispositif électronique (34) est reçu par la bague universelle de montage (32) et le dispositif électronique (34) est placé dans le boîtier électrique (12), le support de montage (14) étant monté sur la bague universelle de montage (32) et le boîtier électrique (12), et l'ensemble de plaque de recouvrement (16) est monté sur le support de montage (14).

7. Combinaison comprenant l'assemblage selon la revendication précédente et un boîtier défini par une paroi ; le boîtier électrique (12) de l'assemblage étant positionné à l'intérieur du boîtier de paroi de telle sorte que la plaque de recouvrement (16) est affleurant avec une surface du mur et le boîtier électrique (12) et le dispositif électronique (34) sont encastrés dans le boîtier de paroi.

8. Procédé d'utilisation de la bague universelle de montage (32) selon les revendications 1 à 5, comprenant les étapes suivantes consistant à :
a. Fixer un dispositif électronique (34) sur au moins une patte de montage (38) de la bague universelle de montage (32) ;
b. Positionner la bague universelle de montage (32) et le dispositif électronique (34) dans un boîtier électrique (12) ;
c. Positionner un support de montage (14) sur la bague universelle de montage (32) et fixer le support de montage (14) sur le boîtier (12) ; et
d. Positionner un ensemble de recouvrement (16) sur le support de montage (14) et fixer l'ensemble de recouvrement (16) sur le support de montage (14).

9. Procédé selon la revendication 8, comprenant en outre un ajustement des performances du dispositif électronique (34) en retirant une section (60) du support de montage (14) de sorte que le support de montage (14) ne forme pas une boucle fermée continue.

10. Procédé selon la revendication 8 ou 9, dans lequel la fixation d'un ensemble de recouvrement (16) au support de montage (14) comprend en outre un positionnement d'une partie de l'ensemble de recouvrement (16) de manière à affleurer la surface d'une paroi.

11. Procédé selon l'une quelconque des revendications 8 à 10 comprenant un ajustement des performances du dispositif électronique (34) en repositionnant le dispositif électronique (34) par rapport audit au moins une patte de fixation.

12. Procédé selon l'une quelconque des revendications 8 à 11, comprenant en outre le positionnement de la plaque (36) de la bague universelle de montage (32) par rapport au support de montage (14) de sorte que la partie de la section retirée du support de montage (14) n'est pas en contact avec la plaque (36).

13. Procédé selon l'une quelconque des revendications 8 à 12, dans lequel le boîtier (12) est un boîtier de jonction cylindrique, ou le boîtier (12) est de forme rectiligne.

14. Procédé selon la revendication 8, dans lequel le boîtier électrique (12) est encastré dans une paroi, et l'ensemble de recouvrement (16) est monté sur le support de montage (14) de telle sorte que l'ensemble de recouvrement (16) est affleurant avec la surface de la paroi.

15. Procédé selon l'une quelconque des revendications 8 à 14, dans lequel le dispositif électronique (34) est un lecteur à contact, un lecteur sans contact, un contrôleur miniature et un module d'interface de porte.
